# EUROPEAN PATENT SPECIFICATION

(11) **EP 2 542 381 B1**
(45) Date of publication and mention of the grant of the patent: **31.12.2014**
(21) Application number: 11714658.9
(22) Date of filing: 04.03.2011
(51) Int. Cl.: B24B 7/22, B24B 7/26, B24B 9/06, B24B 9/08, B24B 9/10, B23D 47/02, B23D 59/00, B28D 1/04, B24B 49/02

(54) **MACHINE FOR THE MECHANICAL MACHINING OF PLATE-SHAPED ELEMENTS, PARTICULARLY TILES AND SLABS OF CERAMIC MATERIAL, NATURAL STONES, GLASS OR THE LIKE**
MACHINE FÜR DIE MECHANISCHE BEARBEITUNG VON PLATTENFÖRMIGEN ELEMENTEN, INSBESONDERE FLIESEN UND PLATTEN AUS KERAMIK, NATURSTEIN, GLAS ODER DERGLEICHEN
MACHINE POUR L'USINAGE D'ELEMENTS EN FORME DE PANNEAUX, EN PARTICULIER DE CARREAUX ET DALES EN MATERIAUX CERAMIQUES, PIERRES NATURELLES, VERRES OU AUTRES

(30) Priority: 08.03.2010 IT MO20100056; 05.03.2010 IT MO20100054
(43) Date of publication of application: 09.01.2013
(73) Proprietor: Tecnema Technology S.r.l., 37135 Verona (IT)
(72) Inventor: FAVA, Umberto, I-41126 Modena (IT)
(74) Representative: Luppi, Emanuele
(86) International application number: PCT/IB2011/000483
(87) International publication number: WO 2011/107872

(56) References cited:
- EP-A1- 1 201 385
- WO-A1-99/10149
- US-A- 5 184 428
- US-A- 6 152 809

## Description

### Technical Field

The present invention relates to a machine for the mechanical machining of plate-shaped elements, particularly tiles and slabs of ceramic material, natural stones, glass or the like according to the preamble of claim 1.

### Background Art

It is known that plate-shaped elements like ceramic tiles and bricks, for both floors and walls, or such as marble slabs and/or glass sheets, require frequent mechanical machining, among which grinding and cutting operations.

Within the ceramic industry, for example, the grinding operation is aimed at bringing the sides of the products to perfect project shape or surface state and is performed using grinding machines able to quickly machine large quantities of ceramic products that move forward in succession on a horizontal movement plane.

Traditional grinding machines in fact usually comprise a movement system of plate-shaped elements consisting of four conveyor belts, superimposed two by two and side by side, wherein the plate-shaped products are wedged between the lower conveyor belts and the upper conveyor belts and driven along by these.

The sides of the products to be machined protrude laterally from the conveyor belts and, during forward movement, encounter a succession of work tools, composed of grinding wheels, which remove the excess material and make the profile flush, and if necessary of one or more sloped grinding wheels to carry out the chamfering operation.

In these machines, the work tools are aligned along a horizontal direction parallel to the direction of forward movement of the plate-shaped elements and move close and away with respect to the movement plane of the plate-shaped elements along a horizontal direction perpendicular to the direction of forward movement of the plate-shaped elements.

The distance between the grinding wheels and the conveyor belts is adjustable to set the quantity of material to be removed from the products; for this purpose, a manual adjustment device is provided, of the type of a screw or the like, which can be controlled by an operator.

Alternatively, the patent document US 6,152,809 shows a grinding machine wherein the position of the grinding wheels is automatically adjustable by means of a control unit which controls a series of actuators, one for each grinding wheel.

For performing cutting operations, on the other hand, in the field of the ceramic industry, machines are normally used which have a bearing structure, a horizontal conveyor belt moving along a direction of forward movement and on which are arranged the plate-shaped elements to cut, and one or more work tools made up of cutting disks integrally associated with the bearing structure.

A machine of this type as per preamble of claim 1 is described in document EP1201385A1.

More in particular, the bearing structure has a supporting crossbeam, placed on top and parallel to the conveyor belt and along an axis perpendicular to the direction of forward movement of the plate-shaped elements.

Along the supporting crossbeam is fitted sliding a plurality of operating heads with cutting disks, each head being free to slide independently from the others.

In this machine, the work tools of the different cutting heads are aligned along the supporting crossbeam, i.e. along a horizontal direction perpendicular to the direction of forward movement of the plate-shaped elements and move close and away with respect to the conveyor belt along a direction perpendicular to the surface itself.

The known machines do have a number of drawbacks.

In actual facts, whenever the size of the plate-shaped element being machined has to be changed, the reciprocal position of the work tools has to be changed accordingly and a new set-up must be made which can take several work hours.

This results in long machine down times and low production outputs.

Furthermore, the correct positioning of the work tools on the machine is often affected by the skills of the operator carrying out such adjustments, and this means little reproducibility over time.

The operators who perform such adjustment in fact have usually no instrument whereby to check the correct position of the work tools but have to base their jobs on their experience and/or on the noise levels of the machine and/or on the power input of the work tools.

Furthermore, these set-up phases are strongly affected by the need, on the part of the operator, to evaluate the degree of wear of the work tools, i.e. the shape and position of their active profile, and to use tools which always have a perfect degree of wear and substantially the same from each other.

In actual facts, an excessive degree of wear of one or more work tools will cause a different penetration depth on the plate-shaped element and therefore an imprecise machining.

This drawback reduces therefore the machine flexibility of use, since it greatly restricts the choice of the work tools to use, not allowing for an easy management of stock and pieces available.

To detect the exact position of the tool active profile the use of devices is known such as that shown in patent document US 5,184,428 wherein a non-contact detector is provided which moves close and away with respect to a grinding wheel, that on the contrary stays substantially still.

The detector is composed of a light emitter and a suitable receiver fitted on a mobile frame which is connected to the machine control unit to transmit a signal when the light beam emitted by the light emitter is interrupted by the active profile of the grinding wheel.

The use of such device is however impractical in the case of machines having a plurality of work tools such as those described above, because each tool should be equipped with a corresponding device according to US 5,184,428, with consequent high structural and functional complications.

### Description of the Invention

The main aim of the present invention is to provide a machine for the mechanical machining of plate-shaped elements, particularly tiles and slabs of ceramic material, natural stones, glass or the like, having a flexibility of use considerably higher than that of the above-described known machines.

In particular, the present invention proposes to provide a machine able to easily adapt to machining plate-shaped elements of different sizes and which can be adjusted in a practical and simple way, without long machine down times being required nor special skills on the part of operators.

Another object of the present invention is to provide a machine with a greater production output compared to the machines of known type.

Yet another object of the present invention is to allow the use of work tools with different wear without this negatively affecting the quality of the work done.

The possibility of using work tools distinguished by a different degree of wear allows, at the same time, easier warehouse stock management and, therefore, also a more economical work process.

Yet another object of the present invention is to allow carrying out more precise jobs, in particular for the large sizes, compared to machines of known type.

In particular, the machine according to the invention aims at allowing the control and adjustment of the position of the work tools with respect to the movement plane and therefore with respect to the plate-shaped elements being machined.

Another object of the present invention is to provide a machine for the mechanical machining of plate-shaped elements, particularly tiles and slabs of ceramic material, natural stones, glass or the like that allows overcoming the mentioned drawbacks of the background art within the ambit of a simple, rational, easy to use and low cost solution.

The present objects are achieved by the present machine for the mechanical machining of plate-shaped elements, particularly tiles and slabs of ceramic material, natural stones, glass or the like, comprising:
- at least a base frame;
- forward movement means for at least a plate-shaped element fitted on said base frame and suitable for moving said plate-shaped element on at least a movement plane along at least a direction of forward movement;
- at least a series of work tools for the machining of said plate-shaped element, which are arranged in proximity of said movement plane and are suitable for intercepting said plate-shaped element in its movement along said direction of forward movement, said work tools being aligned the one with the other along an alignment direction substantially parallel to said movement plane and moving one by one close and away with respect to said movement plane along an approach/away direction substantially transversal to said alignment direction; and
- automated adjustment means suitable for adjusting the position of said work tools with respect to said movement plane and electronically connected to a processing unit suitable for controlling its operation;
characterized by the fact that said automated adjustment means comprise:
- emission/receiving means of a rectilinear light beam which is projected substantially parallel to said alignment direction, is located at a predefined distance from said movement plane, and is suitable for being interrupted by said work tools due to the effect of their movement along said approach/away direction; and
- detection means of the position of each of said work tools in correspondence to which each work tool interrupts said rectilinear light beam.

### Brief Description of the Drawings

Other characteristics and advantages of the present invention will become more evident from the description of some preferred, but not exclusive, embodiments of a machine for the mechanical machining of plate-shaped elements, particularly tiles and slabs of ceramic material, natural stones, glass or the like, illustrated by way of example, but not limited to them, in the annexed drawings in which:
figure 1 is an axonometric view of a first embodiment of the machine according to the invention;
figure 2 is a rear view of the machine in figure 1;
figure 3 is an axonometric view of a part of the machine in figure 1;
figure 4 is a plan, schematic and partial view of the part of the machine in figure 3;
figure 5 is an axonometric view of a second embodiment of the machine according to the invention;
figure 6 is an axonometric view of a part of the machine in figure 5;
figure 7 is an axonometric view of a simplified embodiment of the machine in figure 5.

### Embodiments of the Invention

With particular reference to such figures, by 1 is globally indicated a machine for the mechanical machining of plate-shaped elements, particularly tiles and slabs of ceramic material, natural stones, glass or the like.

In detail, in the particular embodiment shown in the figures from 1 to 4, the machine 1 is set for the grinding of plate-shaped elements 4, while in the embodiment shown in the figures from 5 to 7 it is set for cutting the plate-shaped elements 4.

With reference to the embodiment in the figures from 1 to 4, the machine 1 comprises a base frame 2 for resting on the ground which supports forward movement means 3 for the movement of at least one plate-shaped element 4, of the type of a ceramic tile and/or a slab of marble and/or other natural stone and/or a sheet of glass.

The plate-shaped element 4 is substantially rectangular or square and has two opposite and parallel first sides 5 to be ground, a second side 6 and a third side 7 transversal to the first sides 5.

The forward movement means 3 are suitable for moving the plate-shaped element 4 so that it lies on a movement plane 8 and moves along a direction of forward movement A, with the second side 6 arranged upstream and the third side 7 downstream with respect to the direction of forward movement A.

In particular, the forward movement means 3 comprise at least a pair of flexible elements 9a, 9b, 10a, 10b, of the type of belts, bands or the like, closed on themselves in a loop, each of which is wrapped at least in part around two operating wheels 11 and can be placed in contact on opposite faces of the plate-shaped element 4 to drag it along the direction of forward movement A.

More in detail, the forward movement means 3 comprise two of the above-mentioned pairs of flexible elements 9a, 9b, 10a, 10b, of which a first pair 9a, 9b is fitted on a first support structure 12 and a second pair 10a, 10b is fitted on a second support structure 13 and is arranged substantially alongside and parallel to the first pair 9a, 9b.

The flexible elements 9a, 9b of the first pair are arranged one above the other and extend parallel to the direction of forward movement A; similarly, the flexible elements 10a, 10b of the second pair are arranged one above the other and are facing the first pair 9a, 9b in a substantially symmetrical way with respect to a vertical surface parallel to the direction of forward movement A.

During use, the plate-shaped element 4 is intended to rest on the lower flexible elements 9a, 10a wedging underneath the upper flexible elements 9b, 10b.

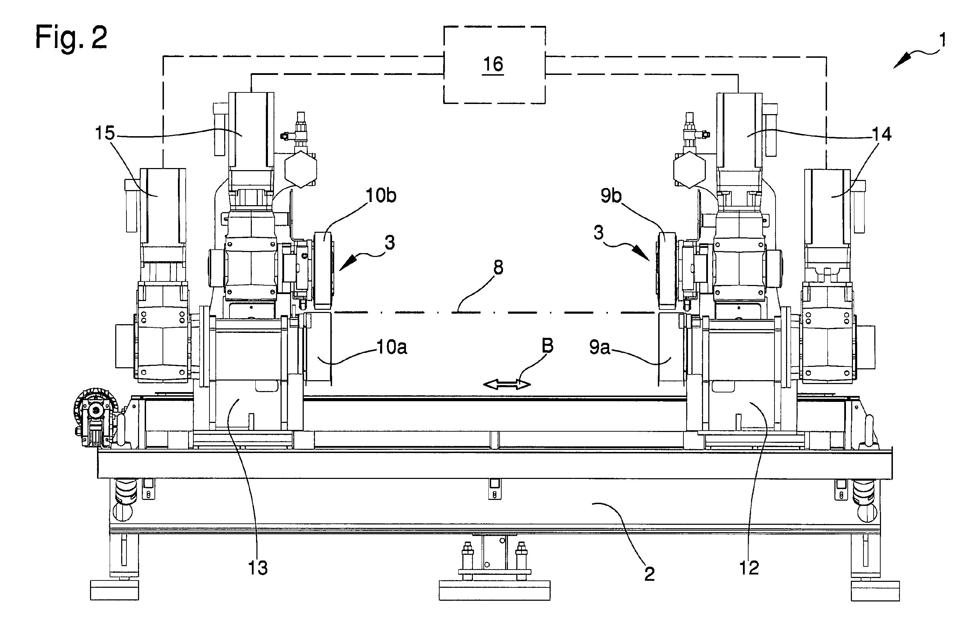

The movement plane 8 consists in the surface defined between the lower flexible elements 9a, 10a and the upper flexible elements 9b, 10b (figure 2).

In the particular embodiment shown in the figures from 1 to 4, the movement plane 8 is substantially horizontal, similarly to the direction of forward movement A, but alternative embodiments cannot be ruled out wherein the movement plane 8 could be inclined.

In this respect, it must be specified that, in the present treatise, some parts of the machine 1 are defined as "horizontal" or "vertical" inasmuch as in the embodiment shown in the illustrations the movement plane 8 is horizontal; as can be easily understood however, in the case of the inclined movement plane 8, the skilled person in this technical field can come to the same conclusions on the parts of the machine 1 depending on the position of the movement plane 8.

Usefully, the flexible elements 9a, 9b, 10a, 10b are associated with at least a series of operating motors 14, 15 electronically connected to a processing and control unit 16 suitable for controlling their relative movement and, in particular, synchronism, to allow constant and regular forward movement.

The support structures 12, 13 extend longitudinally and parallel to the direction of forward movement A and are associated with the base frame 2 in a reciprocally moving way, approaching and moving away along a transversal direction B which is horizontal and substantially at right angles to the direction of forward movement A.

This, in practice, allows bringing the flexible elements 9a, 9b, 10a, 10b closer together and, therefore, reducing or enlarging the movement plane 8 depending on the size of the plate-shaped element 4.

In the proximity of the movement plane 8 the work tools 20, 21 are arranged for machining the plate-shaped element 4, which are suitable for intercepting the plate-shaped element 4 in its movement along the direction of forward movement A.

The work tools 20, 21, in particular, are aligned the one with the other along at least an alignment direction C substantially parallel to the movement plane 8 and are mobile one by one, to approach or move away with respect to the movement plane 8 along an approach/away direction D substantially transversal to the alignment direction C.

Automated adjustment means 23 are also provided suitable for adjusting the position of the work tools 20, 21 with respect to the movement plane 8 and electronically connected to the processing unit 16 suitable for controlling its operation.

The automated adjustment means 23 are of the optical visual type and comprise emission/receiving means 24, 25 of a rectilinear light beam 26 which is projected substantially parallel to the alignment direction C, is located at a predefined distance from the movement plane 8, and is suitable for being interrupted by the work tools 20, 21 due to the effect of their movement along the approach/away direction D.

To adjust the position of the work tools 20, 21 with respect to the movement plane 8 means are also provided for the detection of the position of each work tool 20, 21 in correspondence to which each work tool 20, 21 interrupts the rectilinear light beam 26. For this purpose, it is underlined that each work tool 20, 21 is associated with a corresponding operating device 27 to move the tool along the approach/away direction D, the operating devices 27 being electronically connected to the processing and control unit 16 for controlling the position of the work tools 20, 21 depending on the measurement taken by the detection means.

In particular, the operating devices 27 consist in an equal number of electric motors, e.g., of the brushless type, able to automatically detect their position to inform in agreement the processing and control unit 16.

In the embodiment in the figures from 1 to 4, the work tools 20, 21 comprise a plurality of side grinding wheels 20 and of chamfering wheels 21 for grinding the first sides 5 of the plate-shaped element 4.

The grinding and chamfering wheels 20, 21 are driven in rotation around a respective work axis by means of a corresponding control motor 22 and are split into a first series fitted on the first support structure 12 and a second series fitted on the second support structure 13.

In this embodiment, the two series of grinding and chamfering wheels 20, 21 are arranged on both sides of the movement plane 8 and are aligned along two alignment directions C substantially parallel to the direction of forward movement A.

The approach/away direction D of the work tools 20, 21, instead, is substantially parallel to the movement plane 8 and coincides with the transversal direction B.

The emission/receiving means 24, 25 are suitable for projecting two rectilinear light beams 26, one for each series of grinding wheels 20, 21.

The emission/receiving means 24, 25, e.g., consist in a pair of emitters 24, preferably of the laser type, fitted at a longitudinal extremity of the support structure 12, 13 and in a corresponding pair of receivers 25, these too preferably of the laser type, fitted at the opposite longitudinal extremity of the support structures 12, 13.

The work tools 20, 21 comprise an active profile, i.e., the abrasive surface of the grinding and chamfering wheels 20, 21, and the part of the grinding and chamfering wheels 20, 21 suitable for interrupting the rectilinear light beams 26 in their movement along the approach/away direction D make up precisely such active profile.

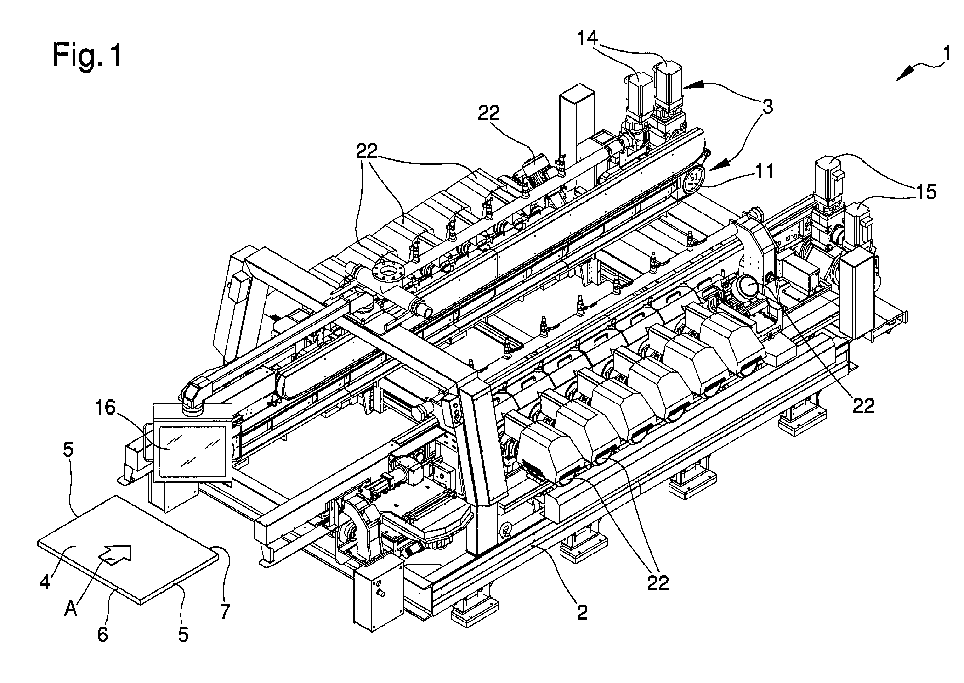

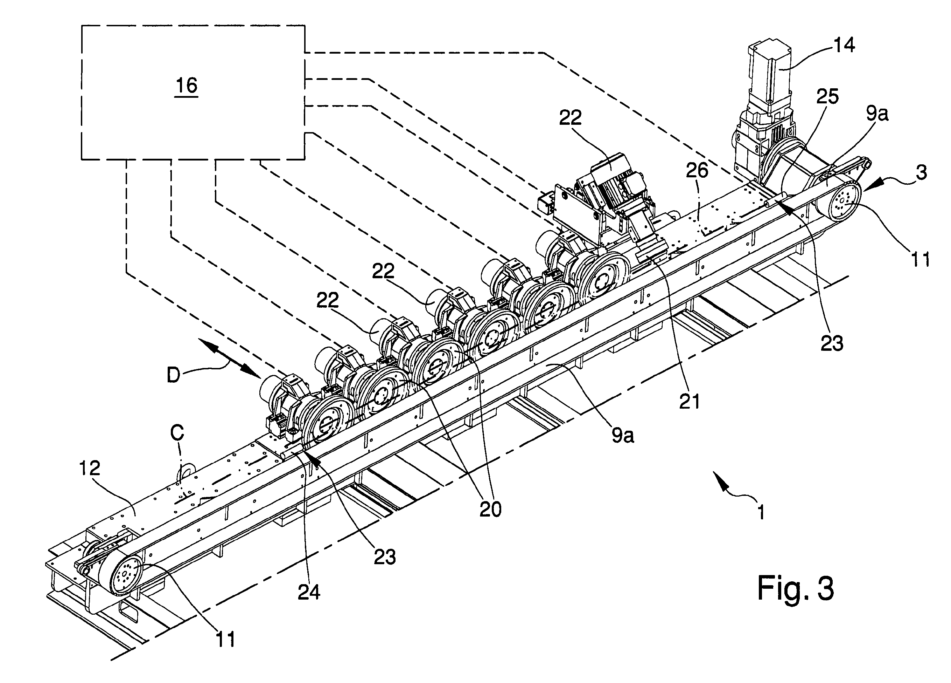

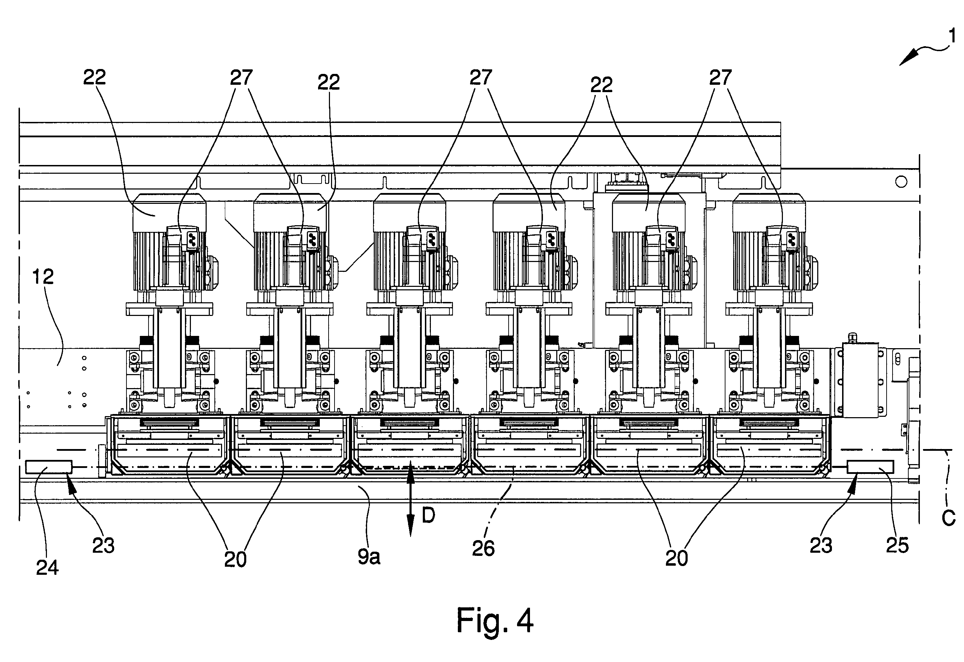

This way, the automated adjustment means 23 are suitable for correcting any errors due to the wear of the active profiles of the grinding and chamfering wheels 20, 21. The operation of the machine shown in the figures 1 to 4 is the following.

Initially, the machine 1 is set by an operator depending on the size of the plate-shaped element 4 to be machined.

For this purpose, it is enough to adjust the distance of the support structures 12, 13 along the direction of forward movement A, dragging with them the grinding and chamfering wheels 20, 21 and the automated adjustment means 23.

By means of the automated adjustment means 23 a sampling is taken of the grinding and chamfering wheels 20, 21 to determine their state of wear and the relevant distance from the movement plane 8.

To operate this way, the work tools 20 and 21 are first positioned at the maximum distance from the movement plane 8 and then made to move forwards one by one towards the corresponding rectilinear light beam 26.

When each grinding and chamfering wheel 20, 21 interrupts the rectilinear light beam 26, the processing and control unit 16 samples its position with respect to the corresponding operating device 27.

Taking into account the fact that the part of the side grinding wheels 20 or of the chamfering wheels 21 that interrupts the rectilinear light beam 26 consists in their active profile, i.e., the abrasive surface, it follows that the above-mentioned sampling allows performing the precise positioning of the wheels and correcting any errors due to wear in a practical and automated way.

Once the side grinding wheels 20 have been positioned and, in the same way, also the chamfering wheels 21, the plate-shaped element 4 to be machined is loaded on the machine 1 and made to move forward along the direction of forward movement A encountering along its path the work tools 20, 21, which perform the required grinding and chamfering operations.

With particular reference to the embodiment in the figures from 5 to 7, the forward movement means 3 fitted on the base frame 2 are different from those of the previous embodiment and consist of a conveyor belt wrapped around two pulleys, not visible in detail in the illustrations and supported in rotation around the respective axes by the base frame 2.

The upper surface of the conveyor belt 3 defines the movement plane 8.

The machine 1 shown in the figures from 5 to 7, furthermore, comprises a plurality of operating heads 50 associated with the base frame 2 and carrying the work tools 51, suitable for intercepting the plate-shaped element 4 in its movement along the direction of forward movement A.

The operating heads 50 are mobile along a direction of adjustment transversal to the direction of forward movement A, identified in the illustrations by the double arrow E, to change their position with respect to the plate-shaped element 4.

Advantageously, the direction of adjustment E is substantially horizontal and at right angles to the direction of forward movement A.

More in particular, the base frame 2 comprises a guide element 52 which extends along the adjustment direction E and which is arranged above the movement plane 8.

The operating heads 50 are associated sliding in translation to the guide element 52. Advantageously, the machine 1 comprises a plurality of operating heads 50 moving along the adjustment direction E independently the one from the other.

In particular, the machine 1 comprises a first series of operating heads 50, and of corresponding work tools 51, and a second series of operating heads 50, and of corresponding work tools 51, series that are arranged on opposite sides of the same guide element 52.

More in particular, the first series of operating heads 50 fitted on the guide element 52 is turned towards the upstream extremity of the conveyor belt 3 while the second series of operating heads 50 fitted on the guide element 52 is turned towards the downstream extremity.

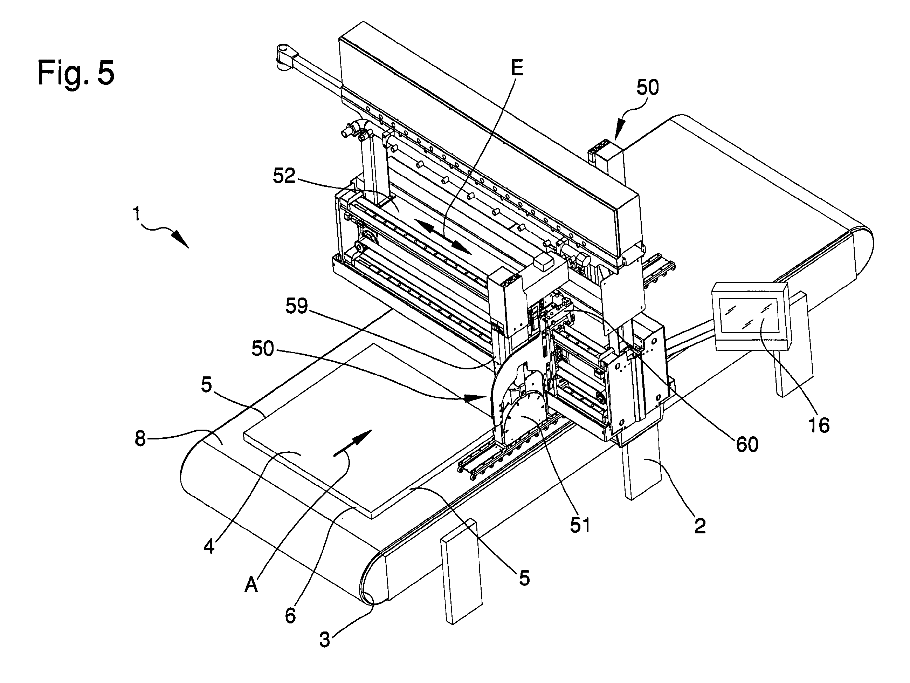

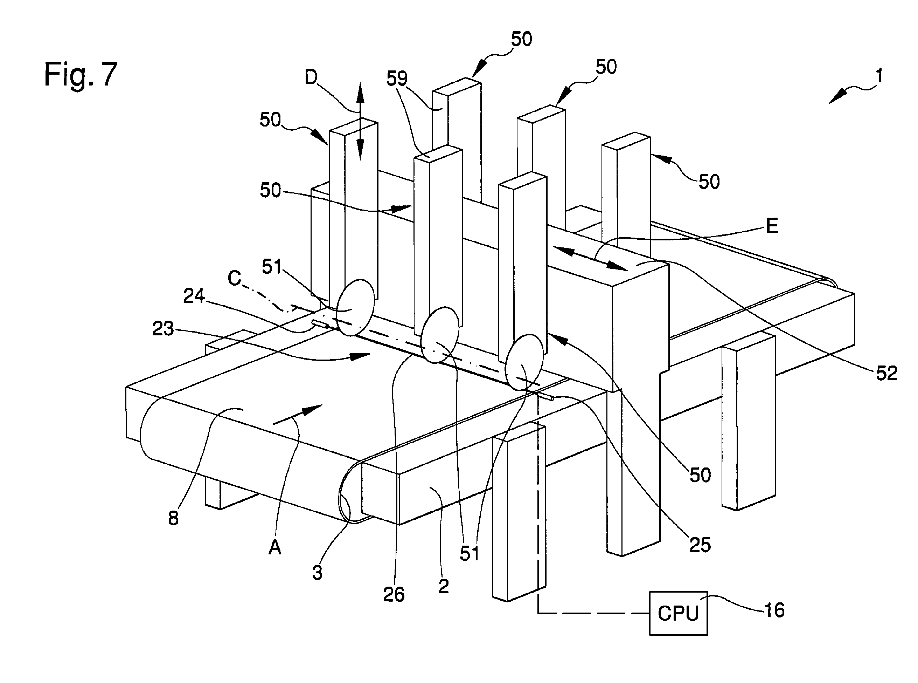

In this respect, it is specified that in figure 5, for easier representation, only one operating head 50 has been shown for each series; it remains understood, however, that on opposite sides of the guide element 52 are fitted two series of several operating heads 50, as schematically shown in figure 7.

Suitably, the operating heads 50 of the first series and those of the second series are moving along the adjustment direction E in a completely independent way the one to the other.

In the particular embodiment shown in the figures from 5 to 7 the work tools 51 consist of respective cutting blades, e.g., cutting disks, for cutting the plate-shaped element 4.

The cutting blades 51 are driven in rotation around the respective first axes 53 by means of at least one belt drive 54.

More in particular, each belt drive 54 comprises two pulleys 55 and 56, of which a first pulley 55 integral in rotation with the relative cutting blade 51 around its first axis 53 and a second pulley 56 moving in rotation around a second axis 57 skew with respect to the relative first axis 53.

The second pulley 56 is the driving pulley, inasmuch as associated with the first motor means 58, and the first pulley 55 is the driven pulley.

Such arrangement of the axes 53 and 57 of the first and of the second pulley 55, 56 allows reducing to the utmost the axial overall dimensions of each operating head 50.

The first axis 53 of the cutting blades 51 is substantially parallel to the adjustment direction E and the second axis 57 is substantially parallel to the direction of forward movement A.

Each operating head 50 also has a base element 59, which is connected sliding to the guide element 52 and which supports in rotation the relative cutting blade 51.

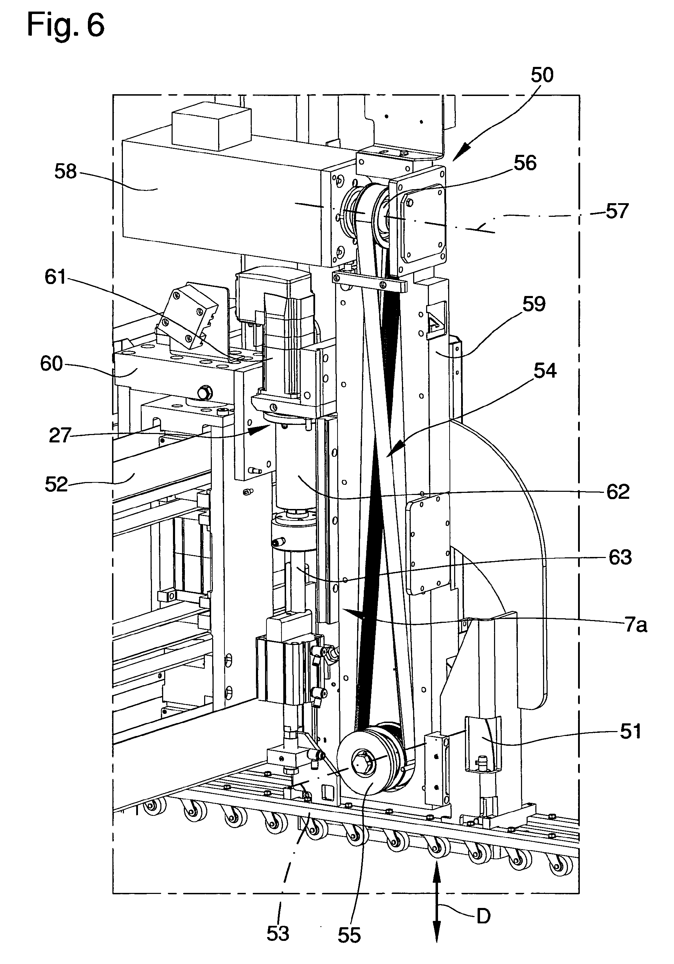

As can be seen in detail in the figure 6, the base element 59 of each operating head 50 also supports in rotation the first pulley 55.

In the embodiment of the figures from 5 to 7 as well, the work tools 51 are aligned along an alignment direction C which, unlike the previous embodiment, is substantially transversal to the direction of forward movement A and parallel to the movement plane 8.

More in detail, taking into account the fact that the machine 1 has two series of operating heads 50 arranged on opposite sides of the guide element 52, it is more correct to say that the cutting blades 51 of the first series are aligned the one with the other along an alignment direction C and that the cutting blades 51 of the second series are aligned the one with the other along another alignment direction C.

Both the alignment directions C are parallel to the adjustment direction E.

Each base element 59 is moving vertically along an approach/away direction D substantially transversal to the movement plane 8 to adjust the position of the relative cutting blade 51 with respect to the movement plane 8 and therefore with respect to the plate-shaped element 4 to be cut.

More in particular, the base element 59 of each operating head 50 is moving vertically with respect to a relative portion 60 associated sliding with the guide element 52 and fixed with respect to it in vertical direction.

Advantageously, for the vertical movement of each cutting blade 51 between the base element 59 and the portion 60 of each operating head 50, an operating device 27 is placed, suitable for adjusting in a gradual and continuous way the position of the cutting blade 51 with respect to the movement plane 8 along the approach/away direction D.

In this second embodiment, the operating device 27 consists in second motor means for each operating head 50.

The second motor means 27 generally comprise an electric motor 61, associated with the portion 60 of each operating head 50, a fixed body 62, integral with the electric motor 61, and an actuator 63, moved by the electric motor 61 at entry and exit from the fixed body 62 and associated with the base element 59 of the relative operating head 50.

More in particular, the fixed body 62 and the actuator 63 are of the type of a worm screw and the actuator 63 is associated integral with the base element 59 of the relative operating head 50.

The electric motors 61 are preferably composed of brushless motors, but different embodiments cannot be ruled out which envisage the use of step-by-step motors or other types known to the technician in the sector.

Preferably, a processing and control unit 16 is operatively connected in entry and in exit to the second motor means 27.

The processing and control unit 16 thus receives an input signal corresponding to the position of the second motor means 27, and therefore of each cutting blade 51, and emits output signals suitable for commanding its operation to adjust the movement in vertical direction.

Advantageously, the machine 1 comprises automated adjustment means 23 suitable for adjusting the position of the work tools 51, in particular their height, with respect to the movement plane 8.

In the same way as the embodiment of the figures from 1 to 4, the automated adjustment means 23 comprise emission/receiving means 24, 25 of a rectilinear light beam 26, which is projected parallel to the alignment direction C, is arranged at a predefined height from the movement plane 8 and is meant to be intercepted by the cutting blades 51 by effect of the vertical movement of the relative operating heads 50. The emission/receiving means 24, 25 (figure 7) comprise an emitter 24, preferably of the laser type, which is fitted on the base frame 2 on one side of the conveyor belt 3, and a corresponding receiver 25, it too preferably of the laser type, which is fitted on the base frame 2 on the opposite side with respect to the conveyor belt 3.

The receiver 25 is suitable for emitting a signal, corresponding to the receiving or not of the rectilinear light beam 26, by the processing and control unit 16.

Figure 7 shows just one emitter 24 and just one receiver 25 but clearly, taking into account the fact that the work tools 51 are distributed along two alignment directions C, it is easy to understand how in actual fact there are two rectilinear light beams 26.

The processing and control unit 16 is therefore operatively connected both to the receivers 25 and to the second motor means 27 for the vertical movement of the cutting blades 51.

The processing and control unit 16 receives a signal corresponding to the receiving or not of the rectilinear light beam 26, and commands the single movement of each cutting blade 51 approaching the movement plane 8 as long as it receives the signal from the receiver 25 which corresponds to the presence of the rectilinear light beam 26.

When the processing and control unit 16 instead receives the signal corresponding to the failure to detect the rectilinear light beam 26 by the receiver 25, then it interrupts the movement of the corresponding cutting blade 51 and identifies the position achieved by the cutting blade itself as the reference position.

In this case as well, as in the embodiment of the figures from 1 to 4, the work tools 51 have an active profile, i.e., the cutting perimeter of the cutting disks 51, and the part of the work tools 51 suitable for interrupting the rectilinear light beams 26 in their movement along the approach/away direction D consist precisely in such active profile, so as to allow the correction of any errors due to the wear of the active profiles of the cutting blades 51.

The operation of the machine 1 shown in the figures from 5 to 7 is the following.

The machine 1 is initially set by an operator depending on the size of the plate-shaped element 4 to be machined.

For this purpose, the operating heads 50 are made to slide along the guide element 52 and distanced the one from the other depending on the size to be obtained.

In this phase, the processing and control unit 16 also commands the second motor means 27 to bring each cutting blade 51 to a predefined work height from the movement plane 8.

At this point, the cutting blades 51 are started in rotation and the conveyor belt 3 is started which causes the plate-shaped element 4 to move forward towards the work tools 51.

In its movement along the direction of forward movement A, the plate-shaped element 4 is intercepted by the cutting blades 51, which determine the scoring, the pre-cutting or the cutting depending on the depth.

At the end of a certain number of operations or predefined time intervals, it will be necessary to check the wear and the alignment of the cutting blades 51, in order to prevent any of these penetrating the plate-shaped element 4 at a depth different from the others, thus producing uneven wear and operation.

To make such adjustment, all the base elements 59 are lifted, thus moving them away from the movement plane 8, and the emission/receiving means 24, 25 are enabled.

The emitter 24 then projects the rectilinear light beam 26 towards the receiver 25 and the processing and control unit 16 detects a signal corresponding to the presence of the rectilinear light beam 26.

The processing and control unit 16 commands the operation in sequence of the second motor means 27 of each operating head 50, in such a way as to move the cutting blades 51 vertically downwards and towards the rectilinear light beam 26.

At the instant in which each cutting blade 51 intercepts the rectilinear light beam 26, the receiver 25 switches the signal emitted towards the processing and control unit 16, which then identifies the position of the corresponding cutting blade 51 and stores it as reference position.

This operation is suitably performed for each cutting blade 51, so that the processing and control unit 16 is able to move all the work tools 51, moving them from the same height with respect to the detected reference position.

This way, after performing the adjustment phase, the cutting blades 51 are all arranged at the same distance from the movement plane 8 and therefore define corresponding incisions on the plate-shaped element 4 having the same depth.

It has in fact been ascertained how the described invention achieves the proposed objects.

In this respect, the fact is underlined that the particular solution of providing a light beam for the detection of the position of the work tools allows setting their position in a practical, functional and above all reliable way, taking into account their level of wear and with the certainty of obtaining the precision needed for the operation without having to make use of the discretion and sensitivity of skilled labour.

The machine according to the invention therefore allows arranging the work tools in the best position without the need to remove any component parts of the machine itself and cutting machine down times to the utmost. This therefore allows increasing machine production output and therefore its efficiency.

The machine according to the invention allows, in particular, the simultaneous use of work tools having a different degree of wear, without this affecting the precision of the performed operation.

In fact, the emission/receiving means used allow adjusting, in an electronic and automatic way, the position of the tools with respect to the movement plane, thereby offsetting any uneven wear and shape defects of same.

Finally, it must be further underlined that the adoption of a processing and control unit for controlling all the machine functions allows providing a high degree of operating precision both during machine setting and during the machining of the plate-shaped elements.

## Claims

1. Machine (1) for the mechanical machining of plate-shaped elements, particularly tiles and slabs of ceramic material, natural stones, glass or the like, comprising:
- at least a base frame (2);
- forward movement means (3) for at least a plate-shaped element (4) fitted on said base frame (2) and suitable for moving said plate-shaped element (4) on at least a movement plane (8) along at least a direction of forward movement (A);
- at least a series of work tools (20, 21, 51) for the machining of said plate-shaped element (4), which are arranged in proximity of said movement plane (8) and are suitable for intercepting said plate-shaped element (4) in its movement along said direction of forward movement (A), said work tools (20, 21, 51) being aligned the one with the other along an alignment direction (C) substantially parallel to said movement plane (8) and moving one by one close and away with respect to said movement plane (8) along an approach or away direction substantially transversal to said alignment direction (C); and
- automated adjustment means (23) suitable for adjusting the position of said work tools (20, 21, 51) with respect to said movement plane (8) and electronically connected to a processing unit (16) suitable for controlling its operation;
**characterized by** the fact that said automated adjustment means (23) comprise:
- emission and receiving means (24, 25) of a rectilinear light beam (26) which is projected substantially parallel to said alignment direction (C), is located at a predefined distance from said movement plane (8), and is suitable for being interrupted by said work tools (20, 21, 51) due to the effect of their movement along said approach or away direction (D); and
- detection means of the position of each of said work tools (20, 21, 51) in correspondence to which each work tool (20, 21, 51) interrupts said rectilinear light beam (26).

2. Machine (1) according to the claim 1, **characterized by** the fact that said work tools (20, 21, 51) comprise an active profile and the part of said work tools (20, 21, 51) suitable for interrupting said rectilinear light beams (26) consists of said active profile, said automated adjustment means (23) being suitable for correcting any errors due to the wear of said active profile of the work tools (20, 21, 51).

3. Machine (1) according to one or more of the preceding claims, **characterized by** the fact that each of said work tools (20, 21, 51) is associated with an operating device (27) along said approach/away direction (D), said operating device (27) being electronically connected to said processing and control unit (16) for controlling the position of said work tools (20, 21, 51) depending on the measurement taken by said detection means.

4. Machine (1) according to one or more of the preceding claims, **characterized by** the fact that said emission/receiving means (24, 25) comprise at least an emitter (24) fitted on said base frame (2) and at least a corresponding receiver (25) fitted on said base frame (2).

5. Machine (1) according to one or more of the preceding claims, **characterized by** the fact that it comprises two of said series of work tools (20, 21, 51) aligned along two of said alignment directions (C), said emission/receiving means (24, 25) being suitable for projecting two of said rectilinear light beams (26), one for each series of work tools (20, 21, 51).

6. Machine (1) according to one or more of the preceding claims, **characterized by** the fact that said work tools (20, 21, 51) comprise at least one between a side grinding wheel (20) and a chamfering wheel (21) for grinding the sides of said plate-shaped element (4).

7. Machine (1) according to one or more of the preceding claims, **characterized by** the fact that said alignment direction (C) of said work tools (20, 21, 51) is substantially parallel to said direction of forward movement (A).

8. Machine (1) according to one or more of the preceding claims, **characterized by** the fact that said approach/away direction (D) is substantially parallel to said movement plane (8).

9. Machine (1) according to one or more of the preceding claims, **characterized by** the fact that said series of work tools (20, 21, 51) are arranged on both sides of said movement plane (8).

10. Machine (1) according to one or more of the preceding claims, **characterized by** the fact that said work tools (20, 21, 51) comprise at least a cutting blade (51) for cutting said plate-shaped element (4).

11. Machine (1) according to one or more of the preceding claims, **characterized by** the fact that said alignment direction (C) of said work tools (20, 21, 51) is substantially transversal to said direction of forward movement (A) and parallel to said movement plane (8).

12. Machine (1) according to one or more of the preceding claims, **characterized by** the fact that said approach/away direction (D) is substantially transversal to said movement plane (8).

13. Machine (1) according to one or more of the preceding claims, **characterized by** the fact that said series of work tools (20, 21, 51) are arranged on opposite sides of a guide element (52) which extends parallel to said alignment direction (C) and which is arranged above said movement plane (8).

## Patentansprüche

1. Maschine (1) für die maschinelle Bearbeitung plattenförmiger Elemente, insbesondere Fliesen und Platten aus keramischem Material, Naturstein, Glas oder dergleichen, mit:
- wenigstens einem Grundrahmen (2);
- Vorbewegungsmittel (3) für wenigstens ein plattenförmiges Element (4), die auf dem Grundrahmen (2) angebracht sind und zum Bewegen des plattenförmigen Elements (4) auf wenigstens einer Bewegungsebene (8) in wenigstens einer Vorbewegungsrichtung (A) geeignet sind;
- wenigstens einer Reihe von Arbeitswerkzeugen (20, 21, 51) für die maschinelle Bearbeitung des plattenförmigen Elements (4), die in der Nähe der Bewegungsebene (8) angeordnet sind und zum Abfangen des plattenförmigen Elements (4) in seiner Bewegung in der Vorbewegungsrichtung (A) geeignet sind, wobei die Arbeitswerkzeuge (20, 21, 51) in einer zur Bewegungsebene (8) im Wesentlichen parallelen Fluchtungsrichtung (C) zueinander ausgerichtet sind und sich nacheinander in Bezug zur Bewegungsebene (8) in einer Annäherungs- oder Wegbewegungsrichtung im Wesentlichen quer zu der Fluchtungsrichtung (C) hin- und wegbewegen; und
- automatischen Einstellmitteln (23), die zum Einstellen der Position der Arbeitswerkzeuge (20, 21, 51) in Bezug zu der Bewegungsebene (8) geeignet sind und elektronisch mit einer Verarbeitungseinheit (16) verbunden sind, die zum Steuern ihres Betriebs geeignet ist;
**dadurch gekennzeichnet, dass** die automatische Einstelleinrichtung (23) umfasst:
- Sende- und Empfangsmittel (24, 25) eines geradlinigen Lichtstrahls (26), welcher im Wesentlichen parallel zu der Fluchtungsrichtung (C) projiziert wird, in einem vordefinierten Abstand von der Bewegungsebene (8) angeordnet ist und dazu geeignet ist, durch das Arbeitswerkzeug (20, 21, 51) aufgrund des Effekts ihrer Bewegung in der Annäherungs- und Wegbewegungsrichtung (D) unterbrochen zu werden; und
- Detektiermittel für die Position jedes der Arbeitswerkzeuge (20, 21, 51) in Übereinstimmung damit, welches jeweilige Arbeitswerkzeug (20, 21, 51) den geradlinigen Lichtstrahl (26) unterbricht.

2. Maschine (1) nach Anspruch 1, **dadurch gekennzeichnet, dass** die Arbeitswerkzeuge (20, 21, 51) ein aktives Profil umfassen und der Teil der Arbeitswerkzeuge (20, 21, 51), der zum Unterbrechen der geradlinigen Lichtstrahle (26) geeignet ist, aus dem aktiven Profil besteht, wobei die automatischen Einstellmittel (23) dazu geeignet sind, Fehler aufgrund der Abnutzung des aktiven Profils der Arbeitswerkzeuge (20, 21, 51) zu korrigieren.

3. Maschine (1) nach ein oder mehreren der vorstehenden Ansprüche, **dadurch gekennzeichnet, dass** jedes der Arbeitswerkzeuge (20, 21, 51) einer Arbeitseinrichtung (27) in der Annäherungs-/Wegbewegungs-Richtung (D) zugeordnet ist, wobei die Arbeitseinrichtung (27) mit der Verarbeitungs- und Steuereinheit (16) zum Steuern der Position der Arbeitswerkzeuge (20, 21, 51) in Abhängigkeit von der durch die Detektiermittel genommenen Messung elektronisch verbunden sind.

4. Maschine (1) nach ein oder mehreren der vorstehenden Ansprüche, **dadurch gekennzeichnet, dass** die Sende-/Empfangs-Mittel (24, 25) umfassen wenigstens einen Sender (24), der auf dem Grundrahmen (2) sitzt, und wenigstens einen korrespondierenden Empfänger (25), der auf dem Grundrahmen (2) sitzt.

5. Maschine (1) nach ein oder mehreren der vorstehenden Ansprüche, **dadurch gekennzeichnet, dass** diese zwei Reihen von Arbeitswerkzeugen (20, 21, 51) umfasst, die in zwei der Fluchtungsrichtungen (C) ausgerichtet sind, wobei die Sende-/Empfangs-Mittel (24, 25) dazu geeignet sind, zwei geradlinige Lichtstrahle (26) zu projizieren, einer für jede Reihe von Arbeitswerkzeugen (20, 21, 51).

6. Maschine (1) nach ein oder mehreren der vorstehenden Ansprüche, **dadurch gekennzeichnet, dass** die Arbeitswerkzeuge (20, 21, 51) umfassen wenigstens eines ausgewählt aus Seiten-Schleifrad (20) und Anfasungsrad (21) zum Schleifen der Seiten des plattenförmigen Elements (4).

7. Maschine (1) nach ein oder mehreren der vorstehenden Ansprüche, **dadurch gekennzeichnet, dass** die Fluchtungsrichtung (C) der Arbeitswerkzeuge (20, 21, 51) im Wesentlichen parallel zu der Vorbewegungsrichtung (A) verläuft.

8. Maschine (1) nach ein oder mehreren der vorstehenden Ansprüche, **dadurch gekennzeichnet, dass** die Annäherungs-/Wegbewegungs-Richtung (D) im Wesentlichen parallel zu der Bewegungsebene (8) verläuft.

9. Maschine (1) nach ein oder mehreren der vorstehenden Ansprüche, **dadurch gekennzeichnet, dass** die Reihen von Arbeitswerkzeugen (20, 21, 51) auf beiden Seiten der Bewegungsebene (8) angeordnet sind.

10. Maschine (1) nach ein oder mehreren der vorstehenden Ansprüche, **dadurch gekennzeichnet, dass** die Arbeitswerkzeuge (20, 21, 51) wenigstens eine Schneidklinge (51) zum Schneiden der plattenförmigen Elemente (4) umfassen.

11. Maschine (1) nach ein oder mehreren der vorstehenden Ansprüche, **dadurch gekennzeichnet, dass** die Fluchtungsrichtung (C) der Arbeitswerkzeuge (20, 21, 51) im Wesentlichen quer zur Vorbewegungsrichtung (A) und parallel zur Bewegungsebene (8) verläuft.

12. Maschine (1) nach ein oder mehreren der vorstehenden Ansprüche, **dadurch gekennzeichnet, dass** die Annäherung-/Wegbewegungs-Richtung (D) im Wesentlichen quer zur Bewegungsebene (8) verläuft.

13. Maschine (1) nach ein oder mehreren der vorstehenden Ansprüche, **dadurch gekennzeichnet, dass** die Reihen von Arbeitswerkzeugen (20, 21, 51) auf einander entgegengesetzten Seiten eines Führungselements (52) angeordnet sind, welches sich parallel zu der Fluchtungsrichtung (C) erstreckt und welches oberhalb der Bewegungsebene (8) angeordnet ist.

## Revendications

1. Machine (1) pour l'usinage mécanique d'éléments en forme de plaques, en particulier de carreaux et de dalles de matériau céramique, pierres naturelles, verre, ou similaire, comprenant :
- au moins un châssis de base (2) ;
- des moyens de déplacement vers l'avant (3) pour au moins un élément en forme de plaque (4), ajustés sur ledit châssis de base (2) et appropriés pour déplacer ledit élément en forme de plaque (4) sur au moins un plan de déplacement (8) suivant au moins une direction de déplacement avant (A) ;
- au moins une série d'outils de travail (20, 21, 51) pour l'usinage dudit élément en forme de plaque (4), qui sont disposés à proximité dudit plan de déplacement (8) et qui sont aptes à intercepter ledit élément en forme de plaque (4) dans son déplacement suivant ladite direction de déplacement avant (A), lesdits outils de travail (20, 21, 51) étant alignés les uns avec les autres suivant une direction d'alignement (C) sensiblement parallèle audit plan de déplacement (8) et se déplaçant un par un en se rapprochant et en s'éloignant par rapport audit plan de déplacement (8) suivant une direction d'approche ou d'éloignement sensiblement transversale à ladite direction d'alignement (C) ; et
- des moyens d'ajustement automatisé (23) appropriés pour ajuster la position desdits outils de travail (20, 21, 51) par rapport audit plan de déplacement (8) et connectés électroniquement à une unité de traitement (16) apte à commander leur fonctionnement ;
**caractérisée par le fait que** lesdits moyens d'ajustement automatisé (23) comprennent :
- des moyens d'émission et de réception (24, 25) d'un faisceau lumineux rectiligne (26) qui est projeté de manière sensiblement parallèle à ladite direction d'alignement (C), qui est situé à une distance prédéfinie dudit plan de déplacement (8), et qui est apte à être interrompu par lesdits outils de travail (20, 21, 51) en raison de l'effet de leur mouvement suivant ladite direction d'approche ou d'éloignement (D) ; et
- des moyens de détection de la position de chacun des outils de travail (20, 21, 51) en correspondance avec celui des outils de travail (20, 21, 51) qui interrompt ledit faisceau lumineux rectiligne (26).

2. Machine (1) selon la revendication 1, **caractérisée par le fait que** lesdits outils de travail (20, 21, 51) comprennent un profil actif, et que la partie desdits outils de travail (20, 21, 51) apte à interrompre lesdits faisceaux lumineux rectilignes (26) consiste en ledit profil actif, lesdits moyens d'ajustement automatisé (23) étant aptes à corriger les erreurs quelconques dues à l'usure dudit profil actif des outils de travail (20,21,51).

3. Machine (1) selon une ou plusieurs des revendications précédentes, **caractérisée par le fait que** chacun desdits outils de travail (20, 21, 51) est associé à un dispositif fonctionnel (27) suivant ladite direction d'approche/d'éloignement (D), ledit dispositif fonctionnel (27) étant connecté électroniquement à ladite unité de traitement et de commande (16) pour commander la position desdits outils de travail (20, 21, 51) en fonction des mesures effectuées par lesdits moyens de détection.

4. Machine (1) selon une ou plusieurs des revendications précédentes, **caractérisée par le fait que** lesdits moyens d'émission/réception (24, 25) comprennent au moins un émetteur (24) ajusté sur ledit châssis de base (2) et au moins un récepteur correspondant (25) ajusté sur ledit châssis de base (2).

5. Machine (1) selon une ou plusieurs des revendications précédentes, **caractérisée par le fait qu'**elle comprend deux desdites séries d'outils de travail (20, 21, 51) alignées suivant deux desdites directions d'alignement (C), lesdits moyens d'émission/réception (24, 25) étant aptes à projeter deux desdits faisceaux lumineux rectilignes (26), un pour chaque série d'outils de travail (20, 21, 51).

6. Machine (1) selon une ou plusieurs des revendications précédentes, **caractérisée par le fait que** lesdits outils de travail (20, 21, 51) comprennent au moins l'une parmi une roue de meulage latérale (20) et une roue de chanfreinage (21) pour le meulage des côtés dudit élément en forme de plaque (4).

7. Machine (1) selon une ou plusieurs des revendications précédentes, **caractérisée par le fait que** ladite direction d'alignement (C) desdits outils de travail (20, 21, 51) est sensiblement parallèle à ladite direction de déplacement avant (A).

8. Machine (1) selon une ou plusieurs des revendications précédentes, **caractérisée par le fait que** ladite direction d'approche/d'éloignement (D) est sensiblement parallèle audit plan de déplacement (8).

9. Machine (1) selon une ou plusieurs des revendications précédentes, **caractérisée par le fait que** lesdites séries d'outils de travail (20, 21, 51) sont disposées des deux côtés dudit plan de déplacement (8).

10. Machine (1) selon une ou plusieurs des revendications précédentes, **caractérisée par le fait que** lesdits outils de travail (20, 21, 51) comprennent au moins une lame de coupe (51) pour la découpe dudit élément en forme de plaque (4).

11. Machine (1) selon une ou plusieurs des revendications précédentes, **caractérisée par le fait que** ladite direction d'alignement (C) desdits outils de travail (20, 21, 51) est sensiblement transversale à ladite direction de déplacement avant (A) et parallèle audit plan de déplacement (8).

12. Machine (1) selon une ou plusieurs des revendications précédentes, **caractérisée par le fait que** ladite direction d'approche/d'éloignement (D) est sensiblement transversale audit plan de déplacement (8).

13. Machine (1) selon une ou plusieurs des revendications précédentes, **caractérisée par le fait que** lesdites séries d'outils de travail (20, 21, 51) sont disposées sur des côtés opposés d'un élément de guidage (52) qui s'étend parallèlement à ladite direction d'alignement (C) et qui est disposé au-dessus dudit plan de déplacement (8).
